(19) Europäisches Patentamt
European Patent Office
Office européen des brevets

(11) Veröffentlichungsnummer: **0 006 153**
**A1**

(12) **EUROPÄISCHE PATENTANMELDUNG**

(21) Anmeldenummer: **79101650.4**

(22) Anmeldetag: **30.05.79**

(51) Int. Cl.³: **C 07 C 103/38**, C 07 C 93/14, C 07 C 91/06, A 01 N 9/20, A 01 N 37/22

(30) Priorität: **10.06.78 DE 2825543**

(43) Veröffentlichungstag der Anmeldung: **09.01.80 Patentblatt 80/1**

(84) Benannte Vertragsstaaten: **BE CH DE FR GB IT NL**

(71) Anmelder: **BAYER Aktiengesellschaft, Zentralbereich Patente,Marken und Lizenzen Bayerwerk, D-5090 Leverkusen 1 (DE)**

(72) Erfinder: **Stetter, Jörg, Dr., Pahlkestrasse 3, D-5600 Wuppertal-1 (DE)**
Erfinder: **Thomas, Rudolf, Dr., Wilkhausstrasse 129, D-5600 Wuppertal-2 (DE)**
Erfinder: **Rauleder, Gebhard, Dr., Mozartstrasse 20, D-5657 Haan (DE)**
Erfinder: **Seifert, Hermann, Dr., Ruwergasse 4, D-5000 Koeln 80 (DE)**
Erfinder: **Waldmann, Helmut, Dr., Carl-Rumpff-Strasse 59, D-5090 Leverkusen (DE)**
Erfinder: **Eue, Ludwig, Dr., Paul-Klee-Strasse 36, D-5090 Leverkusen (DE)**
Erfinder: **Schmidt, Robert Rudolf, Dr., Hahnenweg 5, D-5000 Koeln (DE)**

(54) **N-substituierte Halogenacetanilide, Verfahren zu ihrer Herstellung, sie enthaltende herbizide Mittel, ihre Verwendung als Herbizide, Verfahren zur Herstellung herbizider Mittel, N-Ethylaniline, N-(2-Hydroxyalkyl)-aniline und Verfahren zu beider Herstellung.**

(57) Neue N-substituierte Halogenacetanilide der Formel

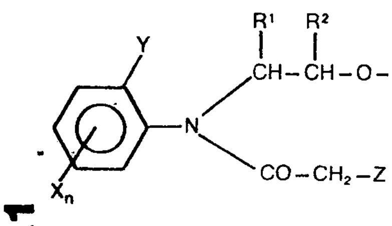

(I)

in welcher

R für Alkyl, Alkenyl, Alkinyl oder gegebenenfalls substituiertes Benzyl steht,

R' für Wasserstoff oder gegebenenfalls substituiertes Alkenyl steht,

R² für Wasserstoff oder gegebenenfalls substituiertes Alkenyl steht,
wobei jedoch jeweils einer der beiden Reste R¹ und R² für Wasserstoff steht und der andere gegebenenfalls substituiertes Alkenyl bedeutet,

X und Y gleich oder verschieden sind und für Alkyl stehen,

Z für Halogen steht und

n für 0, 1 oder 2 steht,

ein Verfahren zur Herstellung der neuen Substanzen durch Umsetzung der entsprechenden N-Ethylaniline mit Halogenessigsäurechloriden bzw. -anhydriden, sowie die Verwendung der Verbindungen der Formel I als Herbizide, und ein Verfahren zur Herstellung von N-Ethylanilinen und N-(2-Hydroxyethyl)-anilinen.

EP 0 006 153 A1

0006153

BAYER AKTIENGESELLSCHAFT
Zentralbereich
Patente, Marken und Lizenzen

5090 Leverkusen, Bayerwerk
Dü-by
Ia

BEZEICHNUNG GEÄNDERT
siehe Titelseite

N-substituierte Halogenacetanilide, Verfahren zu ihrer Herstellung und ihre Verwendung als Herbizide

Die vorliegende Erfindung betrifft neue N-substituierte Halogenacetanilide, ein Verfahren zu ihrer Herstellung sowie ihre Verwendung als Herbizide, insbesondere als selektive Herbizide.

Es ist bereits bekannt geworden, daß man 2,6-Diäthyl-N-methyoxymethyl-chloracetanilid zur selektiven Unkrautbekämpfung verwenden kann (vgl. R. Wegler, Chemie der Pflanzenschutz - und Schädlingsbekämpfungsmittel, Band 5, Seite 255, Springer-Verlag (1977)). Diese Verbindung ist jedoch in ihrer Selektivität gegenüber bestimmten Kulturpflanzen nicht immer ganz befriedigend.

Es wurden nun neue N-substituierte Halogenacetanilide der allgemeinen Formel

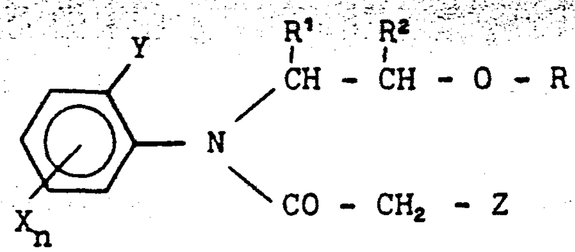

(I)

in welcher

R für Alkyl, Alkenyl, Alkinyl oder gegebenenfalls substituiertes Benzyl steht,

$R^1$ für Wasserstoff oder gegebenenfalls substituiertes Alkenyl steht,

$R^2$ für Wasserstoff oder gegebenenfalls substituiertes Alkenyl steht, wobei jedoch jeweils einer der beiden Reste $R^1$ und $R^2$ für Wasserstoff steht und der andere gegebenenfalls substituiertes Alkenyl bedeutet,

X und Y gleich oder verschieden sind und für Alkyl stehen,

Z für Halogen steht und

n für 0, 1 oder 2 steht,

gefunden.

Weiterhin wurde gefunden, daß man die N-substituierten Halogenacetanilide der Formel (I) erhält, wenn man N-Ethylaniline der Formel

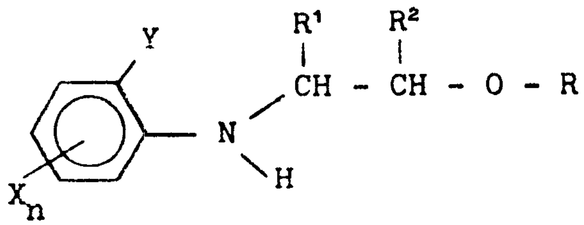

(II)

in welcher

$R, R^1, R^2, X, Y$ und $n$ die oben angegebene Bedeutung haben,

mit Halogenessigsäurechloriden bzw. -anhydriden der Formeln

$$Cl - CO - CH_2 - Z \quad (IIIa)$$

bzw.

$$O(CO - CH_2 - Z)_2 \quad (IIIb)$$

in welchen

Z die oben angegebene Bedeutung hat,

in Gegenwart eines Verdünnungsmittels und gegebenenfalls in Gegenwart eines säurebindenden Mittels umsetzt.

Außerdem wurde gefunden, daß die N-substituierten Halogenacetanilide der Formel (I) starke herbizide, insbesondere auch selektiv-herbizide Eigenschaften aufweisen.

Überraschenderweise sind die erfindungsgemäßen N-substituierten Halogenacetanilide dem bekannten 2,6-Diäthyl-N-methoxymethyl-chloracetanilid bei gleichwertiger oder besserer allgemeiner herbizider Wirkung in ihren selektiven herbiziden Eigenschaften überlegen. Hervorzuheben ist vor allem, daß die erfindungsgemäßen Stoffe in wichtigen Kulturpflanzen, wie Baumwolle, Rüben, Mais, Sojabohnen und Getreide, eine bessere selektive herbizide Wirksamkeit besitzen als die zuvor erwähnte, vorbekannte Verbindung, welche ein hochaktiver Wirkstoff gleicher Wirkungsart ist.

Von den erfindungsgemäßen N-substituierten Halogen-acetaniliden der Formel (I) sind diejenigen bevorzugt, in denen $\underline{R}$ für geradkettiges oder verzweigtes Alkyl mit 1 bis 4 Kohlenstoffatomen, Alkenyl und Alkinyl mit 2 bis 4 Kohlenstoffatomen sowie gegebenenfalls einfach oder mehrfach durch Halogen oder Alkyl mit 1 bis 4 Kohlenstoffatomen substituiertes Benzyl steht; $\underline{R}^1$ für Wasserstoff oder gegebenenfalls durch Halogen substituiertes Alkenyl mit 2 bis 4 Kohlenstoffatomen steht und $\underline{R}^2$ für Wasserstoff oder gegebenenfalls durch Halogen substituiertes Alkenyl mit 2 bis 4 Kohlenstoffatomen steht, wobei jedoch jeweils einer der beiden Reste $\underline{R}^1$ und $\underline{R}^2$ für Wasserstoff steht und der andere gegebenenfalls durch Halogen substituiertes Alkenyl bedeutet; $\underline{X}$ und $\underline{Y}$ gleich oder

verschieden sind und für geradkettiges oder verzweigtes Alkyl mit 1 bis 4 Kohlenstoffatomen steht; und Z sowie n die oben angegebene Bedeutung haben.

Ganz besonders bevorzugt sind diejenigen Verbindungen der Formel (I), in denen R für Methyl, Ethyl, Isopropyl, n-Butyl, tert.-Butyl, Vinyl, Allyl,Propargyl, Benzyl, 2,6-Dimethylbenzyl, 2-Chlor-6-methylbenzyl oder 2-Ethyl-6-methylbenzyl steht; $R^1$ für Vinyl, Chlorvinyl oder Methylvinyl und $R^2$ für Wasserstoff stehen, bzw. $R^1$ für Wasserstoff und $R^2$ für Vinyl, Chlorvinyl oder Methylvinyl stehen; X und Y unabhängig voneinander für Methyl, Ethyl, Isopropyl, Isobutyl oder tert.- Butyl stehen; Z für Chlor, Brom oder Jod steht und n für O, 1 oder 2 steht.

Im einzelnen seien außer den in den Herstellungsbeispielen genannten Stoffen folgende Verbindungen der allgemeinen Formel (I) beispielhaft erwähnt:

Tabelle 1

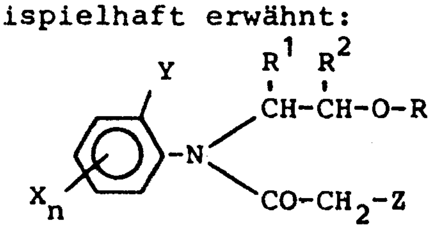

(I)

| R | $R^1$ | $R^2$ | $X_n$ | Y | Z |
|---|---|---|---|---|---|
| $CH_3$ | $-CCl=CH_2$ | H | - | $CH_3$ | Cl |
| $CH_3$ | $-CCl=CH_2$ | H | - | sek.$C_4H_9$ | Cl |
| $CH_3$ | $-CCl=CH_2$ | H | - | tert.$C_4H_9$ | Cl |
| $CH_3$ | $-CCl=CH_2$ | H | 3-$CH_3$ | $CH_3$ | Cl |
| $CH_3$ | $-CCl=CH_2$ | H | 6-$CH_3$ | $CH_3$ | Cl |
| $CH_3$ | $-CCl=CH_2$ | H | 6-$CH_3$ | $C_2H_5$ | Cl |
| $CH_3$ | H | $-CCl=CH_2$ | - | $CH_3$ | Cl |
| $CH_3$ | H | $-CCl=CH_2$ | - | sek.$C_4H_9$ | Cl |
| $CH_3$ | H | $-CCl=CH_2$ | - | tert.$C_4H_9$ | Cl |
| $CH_3$ | H | $-CCl=CH_2$ | - | $CH_3$ | Cl |
| $CH_3$ | H | $-CCl=CH_2$ | 6-$CH_3$ | $CH_3$ | Cl |
| $CH_3$ | H | $-CCl=CH_2$ | 6-$CH_3$ | $C_2H_5$ | Cl |
| $CH_3$ | $-CH=CH_2$ | H | - | $CH_3$ | Cl |
| $CH_3$ | $-CH=CH_2$ | H | - | sek.$C_4H_9$ | Cl |
| $CH_3$ | $-CH=CH_2$ | H | - | tert.$C_4H_9$ | Cl |
| $CH_3$ | $-CH=CH_2$ | H | 3-$CH_3$ | $CH_3$ | Cl |
| $CH_3$ | $-CH=CH_2$ | H | 6-$CH_3$ | $CH_3$ | Cl |
| $CH_3$ | H | $-CH=CH_2$ | - | $CH_3$ | Cl |
| $CH_3$ | H | $-CH=CH_2$ | - | sek.$C_4H_9$ | Cl |
| $CH_3$ | H | $-CH=CH_2$ | - | tert.$C_4H_9$ | Cl |
| $CH_3$ | H | $-CH=CH_2$ | 3-$CH_3$ | $CH_3$ | Cl |
| $CH_3$ | H | $-CH=CH_2$ | 6-$CH_3$ | $CH_3$ | Cl |
| $CH_3$ | H | $-CH=CH_2$ | 6-$CH_3$ | $C_2H_5$ | Cl |

| R | $R^1$ | $R^2$ | Xn | Y | Z |
|---|---|---|---|---|---|
| $C_2H_5$ | $-CH=CH_2$ | H | $6-CH_3$ | $CH_3$ | Cl |
| $C_2H_5$ | $-CH=CH_2$ | H | $6-CH_3$ | $C_2H_5$ | Cl |
| $C_2H_5$ | $-CH=CH_2$ | H | $6-C_2H_5$ | $C_2H_5$ | Cl |
| $C_2H_5$ | H | $-CH=CH_2$ | $6-CH_3$ | $CH_3$ | Cl |
| $C_2H_5$ | H | $-CH=CH_2$ | $6-CH_3$ | $C_2H_5$ | Cl |
| $C_2H_5$ | H | $-CH=CH_2$ | $6-C_2H_5$ | $C_2H_5$ | Cl |
| $n-C_3H_7$ | $-CH=CH_2$ | H | $6-CH_3$ | $CH_3$ | Cl |
| $n-C_3H_7$ | $-CH=CH_2$ | H | $6-CH_3$ | $C_2H_5$ | Cl |
| $n-C_3H_7$ | $-CH=CH_2$ | H | $6-C_2H_5$ | $C_2H_5$ | Cl |
| $n-C_3H_7$ | H | $-CH=CH_2$ | $6-CH_3$ | $CH_3$ | Cl |
| $n-C_3H_7$ | H | $-CH=CH_2$ | $6-CH_3$ | $C_2H_5$ | Cl |
| $n-C_3H_7$ | H | $-CH=CH_2$ | $6-C_2H_5$ | $C_2H_5$ | Cl |
| $n-C_4H_9$ | $-CH=CH_2$ | H | $6-CH_3$ | $CH_3$ | Cl |
| $n-C_4H_9$ | $-CH=CH_2$ | H | $6-CH_3$ | $C_2H_5$ | Cl |
| $n-C_4H_9$ | $-CH=CH_2$ | H | $6-C_2H_5$ | $C_2H_5$ | Cl |
| $n-C_4H_9$ | H | $-CH=CH_2$ | $6-CH_3$ | $CH_3$ | Cl |
| $n-C_4H_9$ | H | $-CH=CH_2$ | $6-CH_3$ | $C_2H_5$ | Cl |
| $n-C_4H_9$ | H | $-CH=CH_2$ | $6-C_2H_5$ | $C_2H_5$ | Cl |
| $-CH_2-C\equiv CH$ | $-CH=CH_2$ | H | $6-CH_3$ | $CH_3$ | Cl |
| $-CH_2-C\equiv CH$ | $-CH=CH_2$ | H | $6-CH_3$ | $C_2H_5$ | Cl |
| $-CH_2-C\equiv CH$ | $-CH=CH_2$ | H | $6-C_2H_5$ | $C_2H_5$ | Cl |
| $-CH_2-C\equiv CH$ | H | $-CH=CH_2$ | $6-CH_3$ | $CH_3$ | Cl |
| $-CH_2-C\equiv CH$ | H | $-CH=CH_2$ | $6-CH_3$ | $C_2H_5$ | Cl |
| $-CH_2-C\equiv CH$ | H | $-CH=CH_2$ | $6-C_2H_5$ | $C_2H_5$ | Cl |

Verwendet man beispielsweise 2-Ethyl-6-methyl-N-(1'-vinyl-2'-methoxy-äthyl)-anilin und Chloracetylchlorid als Ausgangsstoffe, so kann der Reaktionsablauf durch das folgende Formelschema wiedergegeben werden:

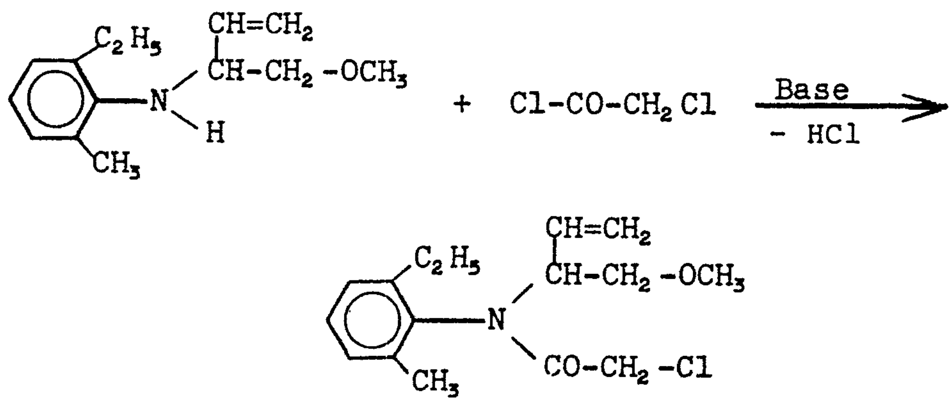


Die als Ausgangsstoffe zu verwendenden N-Ethyl-aniline sind durch die Formel (II) allgemein definiert. In dieser Formel stehen R, $R^1$, $R^2$, X, Y und n vorzugsweise für diejenigen Reste, die im Zusammenhang mit der Beschreibung der Verbindungen der Formel (I) für die betreffenden Reste bereits vorzugsweise genannt wurden.

Als Beispiele für Verbindungen der Formel (II) seien im einzelnen die in der nachfolgenden Tabelle 2 aufgeführten Stoffe genannt:

Tabelle 2:

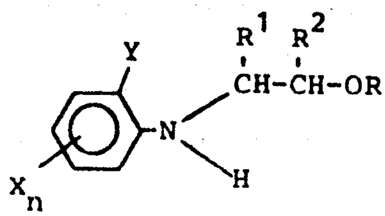

(II)

| R | $R^1$ | $R^2$ | $X_n$ | Y |
|---|---|---|---|---|
| $CH_3$ | $-CCl=CH_2$ | H | - | $CH_3$ |
| $CH_3$ | $-CCl=CH_2$ | H | - | sek.$C_4H_9$ |
| $CH_3$ | $-CCl=CH_2$ | H | - | tert.$C_4H_9$ |
| $CH_3$ | $-CCl=CH_2$ | H | 3-$CH_3$ | $CH_3$ |
| $CH_3$ | $-CCl=CH_2$ | H | 6-$CH_3$ | $CH_3$ |
| $CH_3$ | $-CCl=CH_2$ | H | 6-$CH_3$ | $C_2H_5$ |
| $CH_3$ | H | $-CCl=CH_2$ | - | $CH_3$ |
| $CH_3$ | H | $-CCl=CH_2$ | - | sek.$C_4H_9$ |
| $CH_3$ | H | $-CCl=CH_2$ | - | tert.$C_4H_9$ |
| $CH_3$ | H | $-CCl=CH_2$ | - | $CH_3$ |
| $CH_3$ | H | $-CCl=CH_2$ | 6-$CH_3$ | $CH_3$ |
| $CH_3$ | H | $-CCl=CH_2$ | 6-$CH_3$ | $C_2H_5$ |
| $CH_3$ | $-CH=CH_2$ | H | - | $CH_3$ |
| $CH_3$ | $-CH=CH_2$ | H | - | sek.$C_4H_9$ |

0006153

Tabelle 2 (Fortsetzung)

| R | $R^1$ | $R^2$ | $X_n$ | Y |
|---|---|---|---|---|
| $CH_3$ | $-CH=CH_2$ | H | - | tert.$C_4H_9$ |
| $CH_3$ | $-CH=CH_2$ | H | 3-$CH_3$ | $CH_3$ |
| $CH_3$ | $-CH=CH_2$ | H | 6-$CH_3$ | $CH_3$ |
| $CH_3$ | H | $-CH=CH_2$ | - | $CH_3$ |
| $CH_3$ | H | $-CH=CH_2$ | - | sek.$C_4H_9$ |
| $CH_3$ | H | $-CH=CH_2$ | - | tert.$C_4H_9$ |
| $CH_3$ | H | $-CH=CH_2$ | 3-$CH_3$ | $CH_3$ |
| $CH_3$ | H | $-CH=CH_2$ | 6-$CH_3$ | $CH_3$ |
| $CH_3$ | H | $-CH=CH_2$ | 6-$CH_3$ | $C_2H_5$ |
| $C_2H_5$ | $-CH=CH_2$ | H | 6-$CH_3$ | $CH_3$ |
| $C_2H_5$ | $-CH=CH_2$ | H | 6-$CH_3$ | $C_2H_5$ |
| $C_2H_5$ | $-CH=CH_2$ | H | 6-$C_2H_5$ | $C_2H_5$ |
| $C_2H_5$ | H | $-CH=CH_2$ | 6-$CH_3$ | $CH_3$ |
| $C_2H_5$ | H | $-CH=CH_2$ | 6-$CH_3$ | $C_2H_5$ |
| $C_2H_5$ | H | $-CH=CH_2$ | 6-$C_2H_5$ | $C_2H_5$ |
| n-$C_3H_7$ | $-CH=CH_2$ | H | 6-$CH_3$ | $CH_3$ |
| n-$C_3H_7$ | $-CH=CH_2$ | H | 6-$CH_3$ | $C_2H_5$ |
| n-$C_3H_7$ | $-CH=CH_2$ | H | 6-$C_2H_5$ | $C_2H_5$ |
| n-$C_3H_7$ | H | $-CH=CH_2$ | 6-$CH_3$ | $CH_3$ |
| n-$C_3H_7$ | H | $-CH=CH_2$ | 6-$CH_3$ | $C_2H_5$ |
| n-$C_3H_7$ | H | $-CH=CH_2$ | 6-$C_2H_5$ | $C_2H_5$ |
| n-$C_4H_9$ | $-CH=CH_2$ | H | 6-$CH_3$ | $CH_3$ |

Tabelle 2 (Fortsetzung)

| R | $R^1$ | $R^2$ | $X_n$ | Y |
|---|---|---|---|---|
| $n-C_4H_9$ | $-CH=CH_2$ | H | $6-CH_3$ | $C_2H_5$ |
| $n-C_4H_9$ | $-CH=CH_2$ | H | $6-C_2H_5$ | $C_2H_5$ |
| $n-C_4H_9$ | H | $-CH=CH_2$ | $6-CH_3$ | $CH_3$ |
| $n-C_4H_9$ | H | $-CH=CH_2$ | $6-CH_3$ | $C_2H_5$ |
| $n-C_4H_9$ | H | $-CH=CH_2$ | $6-C_2H_5$ | $C_2H_5$ |
| $-CH_2-C\equiv CH$ | $-CH=CH_2$ | H | $6-CH_3$ | $CH_3$ |
| $-CH_2-C\equiv CH$ | $-CH=CH_2$ | H | $6-CH_3$ | $C_2H_5$ |
| $-CH_2-C\equiv CH$ | $-CH=CH_2$ | H | $6-C_2H_5$ | $C_2H_5$ |
| $-CH_2-C\equiv CH$ | H | $-CH=CH_2$ | $6-CH_3$ | $CH_3$ |
| $-CH_2-C\equiv CH$ | H | $-CH=CH_2$ | $6-CH_3$ | $C_2H_5$ |
| $-CH_2-C\equiv CH$ | H | $-CH=CH_2$ | $6-C_2H_5$ | $C_2H_5$ |

Die N-Ethyl-aniline der Formel (II) sind noch nicht bekannt. Sie können jedoch in allgemein bekannter Weise erhalten werden, indem man z.B. N-(2-Hydroxyethyl)-aniline der Formel

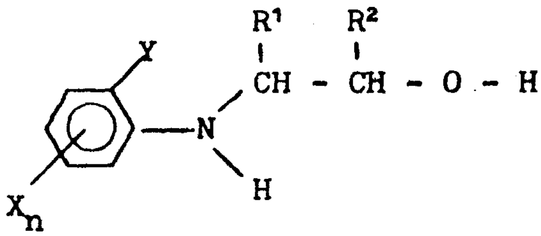

(IV)

in welcher

$R^1$, $R^2$, X,
Y und n die oben angegebene Bedeutung haben,

mit bekannten Halogeniden der Formel

$$Hal - R \quad (V)$$

in welcher

R die oben angegebene Bedeutung hat und

Hal für Halogen, insbesondere Chlor oder Brom steht,

in einem Zweiphasensystem, wie z.B. wäßrige Natron- oder Kalilauge/Toluol oder Methylenchlorid, unter Zusatz eines Phasen-Transfer-Katalysators, wie beispielsweise einer Ammonium- oder Phosphoniumverbindung, bei Temperaturen zwischen 20 und 100°C umsetzt.

Zur Herstellung von denjenigen N-Ethyl-anilinen der Formel ( II), in denen R für Methyl steht, kann anstelle des Halogenids der Formel (V) vorzugsweise auch Dimethylsulfat eingesetzt werden (vergleiche die Herstellungsbeispiele).

Die zur Herstellung von Verbindungen der Formel (II) als Ausgangsstoffe zu verwendenden N-(2-Hydroxyethyl)-aniline sind durch die Formel (IV) allgemein definiert. In dieser Formel stehen $R^1$, $R^2$, X, Y und n vorzugsweise für diejenigen Reste, die im Zusammenhang mit der Beschreibung der Verbindungen der Formel (I) für die betreffenden Reste bereits vorzugsweise genannt wurden.

Als Beispiele für Verbindungen der Formel (IV) seien im einzelnen die in der nachfolgenden Tabelle 3 aufgeführten Stoffe genannt:

Tabelle 3:

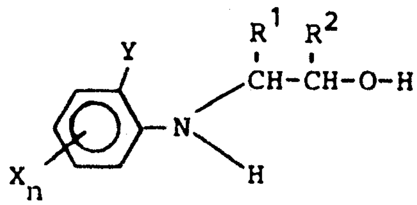

(IV)

| $R^1$ | $R^2$ | $X_n$ | Y |
|---|---|---|---|
| $-CCl=CH_2$ | H | - | $CH_3$ |
| $-CCl=CH_2$ | H | - | sek.$C_4H_9$ |
| $-CCl=CH_2$ | H | - | tert.$C_4H_9$ |
| $-CCl=CH_2$ | H | 3-$CH_3$ | $CH_3$ |
| $-CCl=CH_2$ | H | 6-$CH_3$ | $CH_3$ |
| $-CCl=CH_2$ | H | 6-$CH_3$ | $C_2H_5$ |
| H | $-CCl=CH_2$ | - | $CH_3$ |
| H | $-CCl=CH_2$ | - | sek.$C_4H_9$ |
| H | $-CCl=CH_2$ | - | tert.$C_4H_9$ |
| H | $-CCl=CH_2$ | - | $CH_3$ |
| H | $-CCl=CH_2$ | 6-$CH_3$ | $CH_3$ |
| H | $-CCl=CH_2$ | 6-$CH_3$ | $C_2H_5$ |
| $-CH=CH_2$ | H | - | $CH_3$ |
| $-CH=CH_2$ | H | - | sek.$C_4H_9$ |
| $-CH=CH_2$ | H | - | tert.$C_4H_9$ |
| $-CH=CH_2$ | H | 3-$CH_3$ | $CH_3$ |

Tabelle 3 (Fortsetzung)

| $R^1$ | $R^2$ | $X_n$ | Y |
|---|---|---|---|
| $-CH=CH_2$ | H | $6-CH_3$ | $CH_3$ |
| H | $-CH=CH_2$ | - | $CH_3$ |
| H | $-CH=CH_2$ | - | sek.$C_4H_9$ |
| H | $-CH=CH_2$ | - | tert.$C_4H_9$ |
| H | $-CH=CH_2$ | $3-CH_3$ | $CH_3$ |
| H | $-CH=CH_2$ | $6-CH_3$ | $CH_3$ |
| H | $-CH=CH_2$ | $6-CH_3$ | $C_2H_5$ |
| $-CH=CH_2$ | H | $6-CH_3$ | $CH_3$ |
| $-CH=CH_2$ | H | $6-CH_3$ | $C_2H_5$ |
| $-CH=CH_2$ | H | $6-C_2H_5$ | $C_2H_5$ |
| H | $-CH=CH_2$ | $6-CH_3$ | $CH_3$ |
| H | $-CH=CH_2$ | $6-CH_3$ | $C_2H_5$ |
| H | $-CH=CH_2$ | $6-C_2H_5$ | $C_2H_5$ |
| $-CH=CH_2$ | H | $6-CH_3$ | $CH_3$ |
| $-CH=CH_2$ | H | $6-CH_3$ | $C_2H_5$ |
| $-CH=CH_2$ | H | $6-C_2H_5$ | $C_2H_5$ |
| H | $-CH=CH_2$ | $6-CH_3$ | $CH_3$ |
| H | $-CH=CH_2$ | $6-CH_3$ | $C_2H_5$ |
| H | $-CH=CH_2$ | $6-C_2H_5$ | $C_2H_5$ |
| $-CH=CH_2$ | H | $6-CH_3$ | $CH_3$ |

Tabelle 3 (Fortsetzung)

| $R^1$ | $R^2$ | $X_n$ | Y |
|---|---|---|---|
| $-CH=CH_2$ | H | $6-CH_3$ | $C_2H_5$ |
| $-CH=CH_2$ | H | $6-C_2H_5$ | $C_2H_5$ |
| H | $-CH=CH_2$ | $6-CH_3$ | $CH_3$ |
| H | $-CH=CH_2$ | $6-CH_3$ | $C_2H_5$ |
| H | $-CH=CH_2$ | $6-C_2H_5$ | $C_2H_5$ |
| $-CH=CH_2$ | H | $6-CH_3$ | $CH_3$ |
| $-CH=CH_2$ | H | $6-CH_3$ | $C_2H_5$ |
| $-CH=CH_2$ | H | $6-C_2H_5$ | $C_2H_5$ |
| H | $-CH=CH_2$ | $6-CH_3$ | $CH_3$ |
| H | $-CH=CH_2$ | $6-CH_3$ | $C_2H_5$ |
| H | $-CH=CH_2$ | $6-C_2H_5$ | $C_2H_5$ |

Die N-(2-Hydroxyethyl)-aniline der Formel (IV) sind ebenfalls noch nicht bekannt. Sie können erhalten werden, indem man bekannte Aniline der Formel

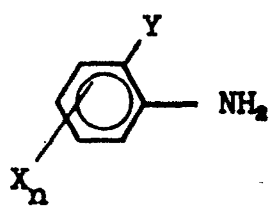

(VI)

in welcher

X,Y und n die oben angegebene Bedeutung haben,

mit Oxiranen der Formel

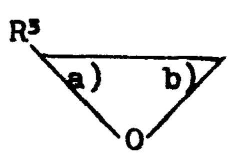

(VII)

in welcher

$R^3$ für gegebenenfalls substituiertes Alkenyl steht,

gegebenenfalls in Gegenwart eines inerten Lösungsmittels, wie beispielsweise eines Halogenkohlenwasserstoffes, und gegebenenfalls einer Lewis-Säure als Katalysator, wie z.B. Bortrifluorid oder Zinkchlorid, bei Temperaturen zwischen 50°C und 180°C, gegebenenfalls im Autoklaven unter Eigendruck, umsetzt.

Dabei entstehen je nach Ringöffnung der Oxirane, -(Spaltung am C-Atom a) oder b) )-, N-(2-Hydroxyethyl)-aniline der isomeren Formeln

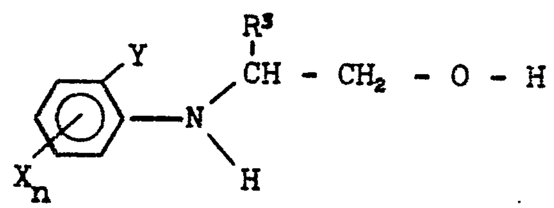

(IVa)

oder

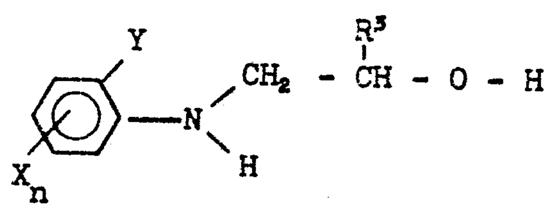

(IVb)

in welchen

$R^3$,X,Y und n die oben angegebene Bedeutung haben,

bzw. Gemische beider isomerer Formen. Wird die Umsetzung ohne Katalysator durchgeführt, kommt es zur Bildung von

Isomerengemischen der Formeln (IVa) und (IVb) im Verhältnis von ca. 1 : 1. Wird die Umsetzung in Gegenwart eines Katalysators durchgeführt, kommt es vorzugsweise zur Bildung der Verbindungen der Formel (IVa) (vergleiche auch die Herstellungsbeispiele). Im Falle der Isomerengemische können diese ohne Trennung direkt weiter zu den Verbindungen der Formel (II) oder zu den erfindungsgemäßen Verbindungen der Formel (I) umgesetzt werden.

In den Verbindungen der Formel (VII) steht $\underline{R^3}$ vorzugsweise für gegebenenfalls durch Halogen, insbesondere Chlor, substituiertes Alkenyl mit 2 bis 4 Kohlenstoffatomen.

Die Oxirane der Formel (VII) sind teilweise bekannt (vergleiche Beilsteins Handbuch der organischen Chemie 17, I, 13 (1934)). Sie können z.B. erhalten werden, indem man die entsprechenden Alkene, wie beispielsweise Butadien oder 3,4-Dichlorbut-1-en mit Peroxypropionsäure umsetzt.

Die außerdem für die erfindungsgemäße Umsetzung als Ausgangsstoffe zu verwendenden Halogenessigsäurechloride bzw. -anhydride sind durch die Formeln (IIIa) und (IIIb) allgemein definiert. In diesen Formeln steht $\underline{Z}$ vorzugsweise für Chlor, Brom oder Jod.

Die Halogenessigsäurechloride und -anhydride der Formeln (IIIa) und (IIIb) sind allgemein bekannte Verbindungen der organischen Chemie.

Als Verdünnungsmittel kommen für die erfindungsgemäße Umsetzung vorzugsweise inerte organische Lösungsmittel infrage.

Hierzu gehören vorzugsweise Ketone, wie Diethylketon, insbesondere Aceton und Methylethylketon; Nitrile, wie Propionitril, insbesondere Acetonitril; Äther, wie Tetrahydrofuran oder Dioxan; aliphatische und aromatische Kohlenwasserstoffe, wie Petroläther, Benzol, Toluol oder Xylol; halogenierte Kohlenwasserstoffe, wie Methylenchlorid, Tetrachlorkohlenstoff, Chloroform oder Chlorbenzol; und Ester, wie Essigester.

Das erfindungsgemäße Verfahren kann gegebenenfalls in Gegenwart von Säurebindern (Chlorwasserstoff-Akzeptoren) durchgeführt werden. Als solche können alle üblichen Säurebindemittel verwendet werden. Hierzu gehören vorzugsweise organische Basen, wie tertiäre Amine, beispielsweise Triäthylamin, oder wie Pyridin; ferner anorganische Basen, wie beispielsweise Alkalihydroxide und Alkalicarbonate.

Die Reaktionstemperaturen können bei der Durchführung des erfindungsgemäßen Verfahrens in einem größeren Bereich variiert werden. Im allgemeinen arbeitet man zwischen 0 und 120°C, vor zugsweise zwischen 20 und 100°C.

Bei der Durchführung des erfindungsgemäßen Verfahrens setzt man vorzugsweise auf 1 Mol der Verbindungen der Formel (II) 1 bis 1,5 Mol Halogenacetylierungsmittel der Formel (IIIa) bzw. (IIIb) und 1 bis 1,5 Mol Säurebinder ein. Die Isolierung der Verbindungen der Formel (I) erfolgt in üblicher Weise.

Die erfindungsgemäßen Wirkstoffe beeinflussen das Pflanzenwachstum und können deshalb als Defoliants, Desiccants, Krautabtötungsmittel, Keimhemmungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

Dikotyle Unkräter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dicotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monocharia, Fimbristylis, Sagittaria, Eleocharis, Scirpus, Paspalum, Ischaemum, Spenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen z.B. Forst-, Ziergehölz-, Obst-, Wein-, Citrus-, Nuss-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Die erfindungsgemäßen Wirkstoffe können als solche oder in ihren Formulierungen auch in Mischung mit bekannten Herbiziden zur Unkrautbekämpfung Verwendung finden, wobei Fertigformulierung oder Tankmischung möglich ist.

Die erfindungsgemäßen Wirkstoffe zeichnen sich neben der guten Totalherbizid-Wirkung vor allem durch ihre selektive Wirksamkeit in wichtigen Kulturpflanzen, wie Baumwolle, Rüben, Mais, Sojabohnen und Getreide aus. Sie eignen sich vornehmlich zur pre-emergence-Anwendung, aber auch bei post-emergence-Anwendung zeigen sie Wirkung. Zur Verbesserung der Wirkung sind Kombinationen mit Metribuzin, Metamitron, Methabenzthiazuron, Fluomethuron, Diuron u.a. möglich.

Die Wirkstoffe können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsionskonzentrate, Wirkstoff-imprägnierte Natur- und synthetische Stoffe und Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden zur Unkrautbekämpfung Verwendung finden, wobei Fertigformulierung oder Tankmischung möglich ist. Auch eine Mischung mit anderen Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Pulver und Granulate angewandt werden. Die Anwendung geschieht in üblicher Weise, z.B. durch Gießen, Spritzen, Sprühen, Stäuben, Streuen, Trockenbeizen, Naßbeizen, Schlämmbeizen oder Inkrustieren.

Die erfindungsgemäßen Wirkstoffe können sowohl nach als auch insbesondere vor Auflaufen der Pflanzen appliziert werden. Sie können auch vor der Saat in den Boden eingearbeitet werden.

Die aufgewandte Wirkstoffmenge kann in größeren Bereichen schwanken. Sie hängt im wesentlichen von der Art des gewünschten Effekts ab. Im allgemeinen liegen die Aufwandmengen zwischen 0,1 und 10 kg Wirkstoff pro ha, vorzugsweise zwischen 0,1 und 5 kg/ha.

In dem nachfolgenden Beispiel wird die nachstehend angegebene Verbindung als Vergleichssubstanz eingesetzt:

A =

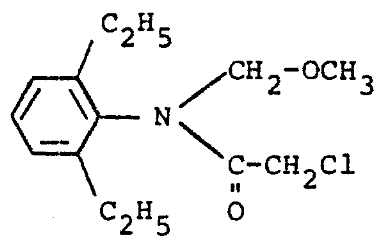

(2,6-Diethyl-N-methyloxymethyl-chloracetanilid).

Beispiel A

Pre-emergence-Test

Lösungsmittel: 5 Gewichtsteile Aceton
Emulgator: 1 Gewichtsteil Alkylarylpolyglycoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

Die erfindungsgemäßen Wirkstoffe gemäß Herstellungsbeispielen 1, 3 und 4 zeigen in diesem Test eine bessere selektive herbizide Wirksamkeit als die aus dem Stand der Technik bekannte Substanz (A).

## Herstellungsbeispiele

### Beispiel 1

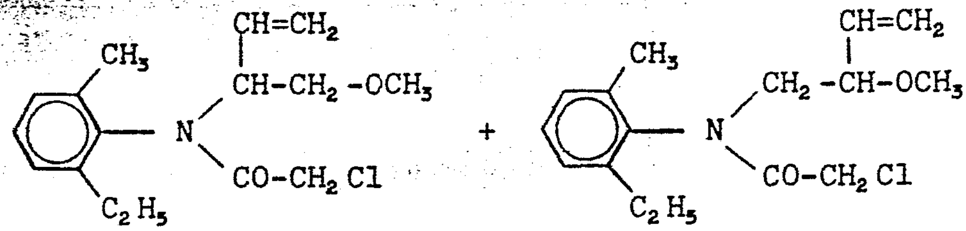

(Isomerengemisch vom Verhältnis 1 : 1)

15g (0,07 Mol)eines Isomerengemisches (Verhältnis 1:1) von 2-Ethyl-6-methyl-N-(1'-vinyl-2'-methoxy-äthyl)-anilin und 2-Ethyl-6-methyl-N-(2'-vinyl-2'-methoxy-äthyl)-anilin werden mit 7,9g (0,1 Mol) absolutem Pyridin in 60 ml absolutem Toluol gelöst und bei 0°C bis 5°C tropfenweise mit 8,7g (0,07 Mol) Chloracetylchlorid versetzt. Nach 2-stündigem Rühren bei Raumtemperatur wird vom ausgefallenen Salz abgesaugt. Das Filtrat wird mit Wasser gewaschen, über Natriumsulfat getrocknet und im Vakuum eingeengt. Der Rückstand wird im Vakuum destilliert. Man erhält 12g (58 % der Theorie) eines Isomerengemisches (Verhältnis 1 : 1) von 2-Ethyl-6-methyl-N-(1'-vinyl-2'-methoxy-äthyl)-chloracetanilid und 2-Ethyl-6-methyl-N-(2'-vinyl-2'-methoxy-äthyl)-chloracetanilid vom Siedepunkt 156 - 160°C/0,1 mm.

Herstellung der Vorprodukte

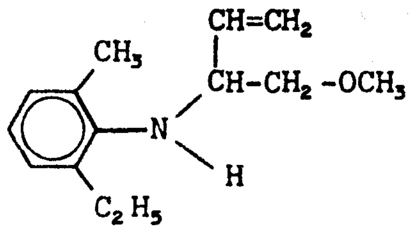

+

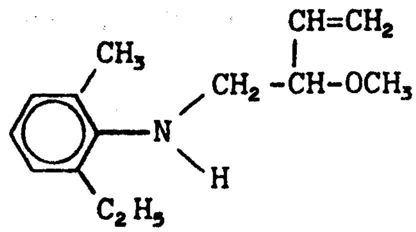

(Isomerengemisch vom Verhältnis 1:1)

20,5g (0,1 Mol) eines Isomerengemisches (Verhältnis 1:1) von 2-Ethyl-6-methyl-N-(1'-vinyl-2'-hydroxy-äthyl)-anilin und 2-Ethyl-6-methyl-N-(2'-vinyl-2'-hydroxy-ethyl)-anilin werden in einem Zweiphasensystem aus 50 ml 50%-iger Natronlauge und 125 ml Toluol gelöst und nach Zugabe von 1 g Benzyltriäthylammoniumchlorid unter schnellem Rühren bei 20°C bis 35°C mit 13,9 g (0,11 Mol) Dimethylsulfat tropfenweise versetzt. Man rührt eine Stunde nach, isoliert die Toluolphase, wäscht sie mehrmals mit Wasser und trocknet über Natriumsulfat. Nach dem Einengen wird der Rückstand im Vakuum destilliert. Man erhält 16,1 g (73,5 % der Theorie) eines Isomerengemisches (Verhältnis 1:1) von 2-Ethyl-6-methyl-N-(1'-vinyl-2'-methoxy-ethyl)-anilin und 2-Ethyl-6-methyl-N-(2'-vinyl-2'-methoxy-ethyl)-anilin vom Siedepunkt 89-93°C/0,05 mm.

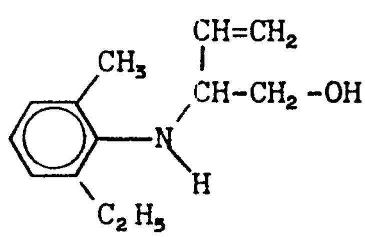

+

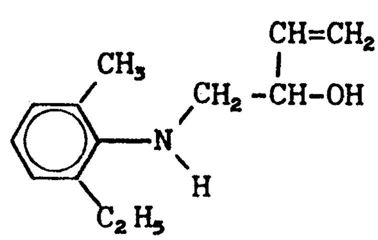

(Isomerengemisch vom Verhältnis 1:1)

In einem Autoklaven werden 118g (0,87 Mol) 2-Ethyl-6-methyl-anilin und 61g (0,87 Mol) Vinyloxiran bei 150°C 5 Stunden unter Eigendruck zur Reaktion gebracht. Anschließend wird das Reaktionsgemisch destilliert. Man

erhält 72,2g (40,5 % der Theorie) eines Isomerengemisches (Verhältnis 1 : 1/gaschromatographisch bestimmt) von 2-Ethyl-6-methyl-N-(1'-vinyl-2'-hydroxy-ethyl)-anilin und 2-Ethyl-6-methyl-N-(2'-vinyl-2'-hydroxy-ethyl)-anilin vom Brechungsindex $n_D^{21}$ = 1,5420.

Beispiel 2

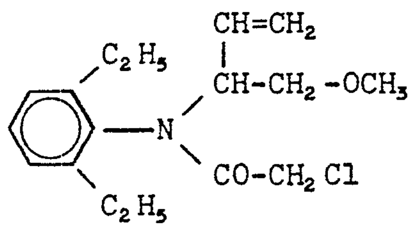

11,65g (0,05 Mol) 2,6-Diethyl-N-(1'-vinyl-2'-methoxy-ethyl )-anilin und 4 g (0,05 Mol) absolutes Pyridin werden in 150 ml absolutem Tetrahydrofuran gelöst und bis zum Rückfluß erhitzt. Dann werden langsam 5,8g (0,051 Mol) Chloracetylchlorid zugetropft und eine halbe Stunde nachgerührt. Man engt durch Abdestillieren des Lösungsmittels ein, nimmt den Rückstand mit Wasser auf, extrahiert mit Methylenchlorid, trocknet über Natriumsulfat und engt ein. Der Rückstand wird im Vakuum destilliert. Man erhält 8,8g (87 % der Theorie) 2,6-Diethyl-N-(1'-vinyl-2'-methoxy-ethyl )-chloracetanilid vom Siedepunkt 140 - 145°C/ 0,1 mm.

Herstellung der Vorprodukte

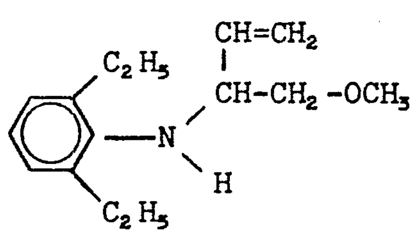

Die Herstellung erfolgt durch Umsetzung von 2,6-Diethyl-N-(1'-vinyl-2'-hydroxy-ethyl)-anilin mit Dimethylsulfat gemäß den Angaben im Beispiel 1. Man erhält 2,6-Diethyl-N-(1'-vinyl-2'-methoxy-ethyl)-anilin vom Siedepunkt 100 - 107° C bei 0,1 mm Hg.

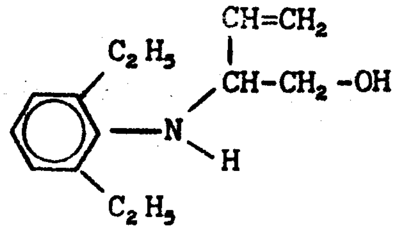

149g (1 Mol) 2,6-Diethylanilin und 35g (0,5 Mol) Vinyloxiran werden in 300 ml Tetrachlorkohlenstoff gelöst und nach Zugabe von 1 ml Bortrifluorid-ätherat fünf Stunden unter Rückfluß erhitzt. Danach wird die Tetrachlorkohlenstoffphase mit 100 ml Wasser gewaschen, über Natriumsulfat getrocknet und eingeengt. Der Rückstand wird im Vakuum destilliert. Man erhält 63g (58 % der Theorie) 2,6-Diethyl-N-(1'-vinyl-2'-hydroxy-ethyl)-anilin, das bei 122-135°C/0,1 mm siedet.

Beispiel 3

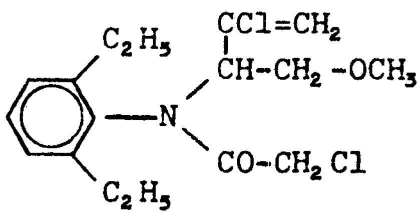

+

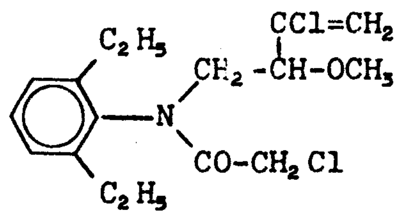

(Isomerengemisch vom Verhältnis 1 : 1)

26,8g (0,1 Mol) eines Isomerengemisches (Verhältnis 1:1) von 2,6-Diethyl-N-[1'-(1"-chlorvinyl)-2'-methoxy-ethyl]-anilin und 2,6-Diethyl-N-[2'-(1" -chlorvinyl)-2'-methoxy-ethyl]-anilin werden in eine Suspension von 15,2g (0,11 Mol) Kaliumcarbonat in 100 ml Toluol eingetragen. Unter Rühren tropft man 11,3g (0,1 Mol) Chloracetylchlorid zu, wobei die Reaktion exotherm verläuft. Anschließend wird 1 Stunde unter Rückfluß erhitzt und abfiltriert. Die organische Lösung wird mit verdünnter Natriumhydrogencarbonat-Lösung und mit Wasser gewaschen, über Natriumsulfat getrocknet und im Vakuum eingeengt. Der ölige

Rückstand wird im Hochvakuum destilliert. Man erhält 22g (64 % der Theorie) eines Isomerengemisches ( Verhältnis 1 : 1) von 2,6-Diethyl-N-[1'-(1''-chlorvinyl)-2'-methoxy-ethyl]-chloracetanilid und 2,6-Diethyl-N-[2'-(1''-chlorvinyl)-2'-methoxy-ethyl]-chloracetanilid, das bei 130-150°C/0,1 mm siedet.

Herstellung der Vorprodukte

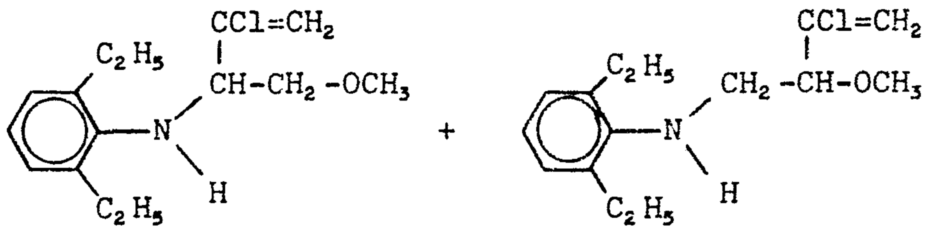

(Isomerengemisch vom Verhältnis 1 : 1)

144g (0,57 Mol) eines Isomerengemisches (Verhältnis 1:1) von 2,6-Diethyl-N-[1'-(1''-chlorvinyl)-2'-hydroxy-ethyl]-anilin und 2,6-Diethyl-N-[2'-(1''-chlorvinyl)-2'-hydroxy-ethyl]-anilin werden unter Rühren in ein Zweiphasensystem aus 1000 ml Toluol, 200 ml 50%-iger wässrige Natronlauge und 5,7g Trimethyl-benzyl-ammoniumchlorid eingetragen. Danach tropft man unter weiterem Rühren 71,8g (0,57 Mol) Dimethylsulfat ein und rührt zwei Stunden bei Raumtemperatur nach. Danach wird die organische Phase abgetrennt, zunächst mit verdünnter wäßriger Natriumhydrogencarbonat-Lösung, dann mehrfach mit Wasser gewaschen, über Natriumsulfat getrocknet und im Vakuum eingeengt. Der ölige Rückstand wird im Hochvakuum destilliert. Man erhält 123g (80 % der Theorie) eines Isomerengemisches (Verhältnis 1 : 1) von 2,6-Diethyl-N-[1'-(1''-chlorvinyl)-2'-methoxy-ethyl]-anilin und 2,6-Diethyl-N-[2'-(1''-chlorvinyl)-2'-methoxy-ethyl]-anilin, das bei 98 - 106°C/ 0,1 mm siedet.

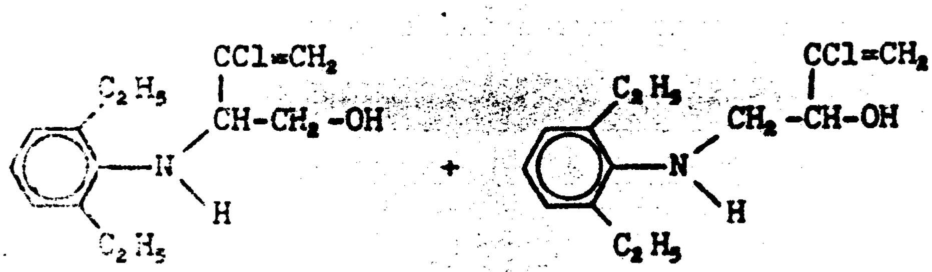

(Isomerengemisch vom Verhältnis 1:1)

149g (1 Mol) 2,6-Diethylanilin in 500 ml Toluol werden mit 14,2g (0,2 Mol) Bortrifluorid-Diäthyläther-Komplex (48%-ig) und anschließend mit 104,5g (1 Mol) 1,2-Epoxy-3-chlor-but-3-en versetzt. Man erhitzt 3 Stunden unter Rückfluß und verteilt anschließend das Reaktionsgemisch zwischen 1 l Toluol und 1 l Wasser. Die organische Phase wird abgetrennt, über Natriumsulfat getrocknet und im Vakuum eingeengt. Der ölige Rückstand wird im Hochvakuum fraktioniert. Man erhält 166g (66% der Theorie) eines Isomerengemisches (Verhältnis 1 : 1) von 2,6-Diethyl-N-[1'-(1''-chlorvinyl)-2'-hydroxy-ethyl]-anilin und 2,6-Diethyl-N-[2'-(1''-chlorvinyl)-2'-hydroxy-ethyl]-anilin, das bei 120 - 127°C/0,1 mm siedet.

Die Isomerenverhältnisse sind durch Kernresonanz- und Massenspektroskopie bestimmt worden.

In entsprechender Weise werden die nachfolgenden Verbindungen der Tabelle 4 erhalten:

Tabelle 4

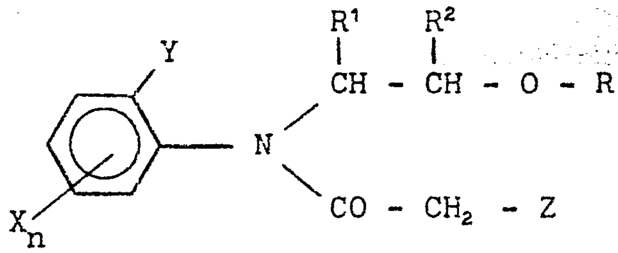

| Bsp. Nr. | R | $R^1$ | $R^2$ | X | Y | Z | Siedep.(°C) /mmHg-Säule |
|---|---|---|---|---|---|---|---|
| 4 | $CH_3$ | $-CH=CH_2$ | H | $6-C_2H_5$ | $CH_3$ | Cl | 156-66/0,1 |
| 5 | $CH_3$ | $-CH=CH_2$ (H) | H ($-CH=CH_2$) | $6-C_2H_5$ | $C_2H_5$ | Cl | Isomerengem. 170-80/0,1 |
| 6 | $CH_3$ | $-CH=CH_2$ | H | $6-CH_3$ | $CH_3$ | Cl | 140-50/0,1 |
| 7 | $-CH_2-CH=CH_2$ | $-CH=CH_2$ | H | $6-C_2H_5$ | $CH_3$ | Cl | Oel |
| 8 | $CH_3$ | $-CH=CH_2$ | H | - | $(CH_3)_3C$ | Cl | 140 - 50/0,1 |
| 9 | $C_2H_5$ | $-CH=CH_2$ (H) | H ($-CH=CH_2$) | $6-C_2H_5$ | $CH_3$ | | Isomerengem. 200/0,2 |

Herstellung der Vorprodukte

Beispiel 7a

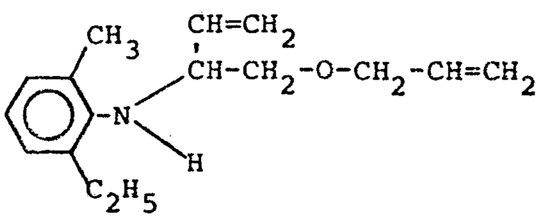

20,5 g (0,1 Mol) 2-Ethyl-6-methyl-N-(1'-vinyl-2'-hydroxyethyl)-anilin und 1 g Benzyltriäthylammoniumchlorid werden in einem 2-Phasengemisch aus 160 ml Toluol und 70 ml 50 % NaOH gelöst und unter schnellem Rühren mit 13,3 g (0,11 Mol) Alkylbromid tropfenweise versetzt. Nach 4 Stunden Rühren wird die organische Phase abgetrennt, mehrmals mit Wasser gewaschen und über $Na_2SO_4$ getrocknet. Nach Entfernen des Lösungsmittels wird im Vakuum destilliert.

$Kp_{0,4}$: 115 - 124 °C. Ausbeute: 16,6 g

## Patentansprüche

1. N-substituierte Halogenacetanilide der Formel

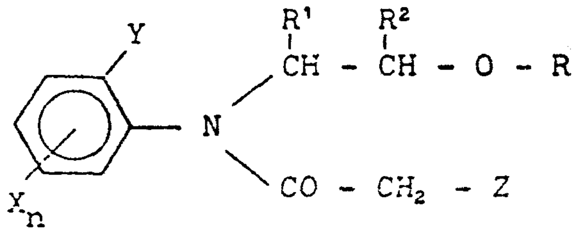

(I)

in welcher

R für Alkyl, Alkenyl, Alkinyl oder gegebenenfalls substituiertes Benzyl steht,

$R^1$ für Wasserstoff oder gegebenenfalls substituiertes Alkenyl steht,

$R^2$ für Wasserstoff oder gegebenenfalls substituiertes Alkenyl steht, wobei jedoch jeweils einer der beiden Reste $R^1$ und $R^2$ für Wasserstoff steht und der andere gegebenenfalls substituiertes Alkenyl bedeutet,

X und Y gleich oder verschieden sind und für Alkyl steht,

Z für Halogen steht und

n für 0, 1 oder 2 steht.

2. Verfahren zur Herstellung von N-substituierten Halogenacetaniliden der Formel (I) gemäß Anspruch 1, dadurch gekennzeichnet, daß man N-Ethyl-aniline der Formel

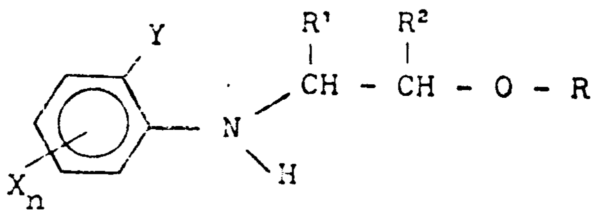

(II)

in welcher
R, $R^1$, $R^2$, X, Y und n die oben angegebene Bedeutung haben,

mit Halogenessigsäurechloriden bzw. -anhydriden der Formeln

$$Cl - CO - CH_2 - Z \quad \text{(IIIa)}$$

bzw.

$$O(CO - CH_2 - Z)_2 \quad \text{(IIIb)}$$

in welchen
Z die oben angegebene Bedeutung hat,

in Gegenwart eines Verdünnungsmittels und gegebenenfalls in Gegenwart eines säurebindenden Mittels umsetzt.

3. Herbizide Mittel, gekennzeichnet durch einen Gehalt an mindestens einem N-substituierten Halogenacetanilid der Formel (I) gemäß Anspruch 1.

4. Verfahren zur Bekämpfung von Unkräutern, dadurch gekennzeichnet, daß man N-substituierte Halogenacetanilide der Formel (I) gemäß Anspruch 1 auf die Unkräuter und/oder deren Lebensraum einwirken läßt.

5. Verwendung von N-substituierten Halogenacetaniliden der Formel (I) gemäß Anspruch 1 zur Bekämpfung von Unkräutern.

6. Verfahren zur Herstellung herbizider Mittel, dadurch gekennzeichnet, daß man N-substituierte Halogenacetanilide der Formel (I) gemäß Anspruch 1 mit Streckmitteln und/oder oberflächenaktiven Mitteln vermischt.

7. N-Ethyl-aniline der Formel

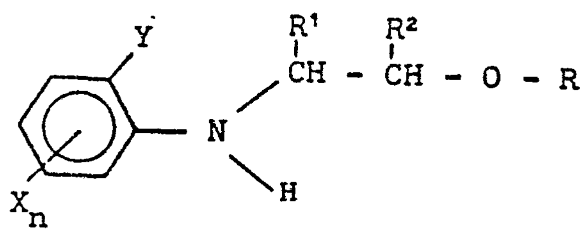

(II)

in welcher

R für Alkyl, Alkenyl, Alkinyl oder gegebenenfalls substituiertes Benzyl steht,

$R^1$ für Wasserstoff oder gegebenenfalls substituiertes Alkenyl steht,

$R^2$ für Wasserstoff oder gegebenenfalls substituiertes Alkenyl steht, wobei jedoch jeweils einer der beiden Reste $R^1$ und $R^2$ für Wasserstoff steht und der andere gegebenenfalls substituiertes Alkenyl bedeutet,

X und Y gleich oder verschieden sind und für Alkyl stehen und

n für O, 1 oder 2 steht.

8. Verfahren zur Herstellung von N-Ethyl-anilinen der Formel (II) gemäß Anspruch 7, dadurch gekennzeichnet, daß man N-(2-Hydroxyethyl)-aniline der Formel

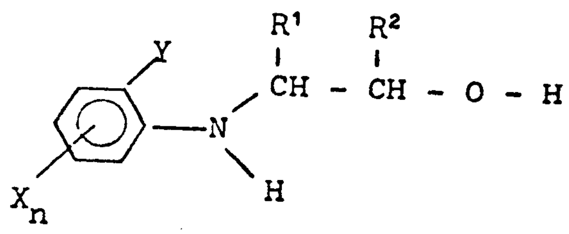

(IV)

in welcher

$R^1$, $R^2$, X, Y und n die oben angegebene Bedeutung haben,

mit Halogenverbindungen der Formel

Hal-R (V)

in welcher
R die oben angegebene Bedeutung hat und
Hal für Halogen steht,

bzw. mit Dimethylsulfat in Gegenwart eines Verdünnungsmittel sowie in Gegenwart eines Säurebindemittels und eines Katalysators umsetzt.

9. N-(2-Hydroxyethyl)-aniline der Formel

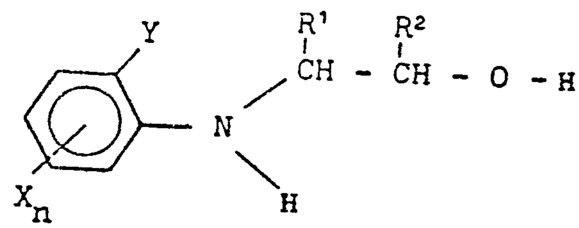

(IV)

in welcher

$R^1$ für Wasserstoff oder gegebenenfalls substituiertes Alkenyl steht,

$R^2$ für Wasserstoff oder gegebenenfalls substituiertes Alkenyl steht, wobei jedoch jeweils einer der beiden Reste $R^1$ und $R^2$ für Wasserstoff steht und der andere gegebenenfalls substituiertes Alkenyl bedeutet,

X und Y gleich oder verschieden sind und für Alkyl stehen und

n für O, 1 oder 2 steht.

0006153

10. Verfahren zur Herstellung von N-(2-Hydroxyethyl)-anilinen der Formel (IV) gemäß Anspruch 9, dadurch gekennzeichnet, daß man Aniline der Formel

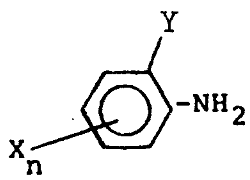

(VI)

in welcher
X, Y und n die oben angegebene Bedeutung haben,
mit Oxiranen der Formel

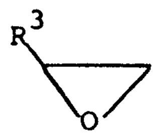

(VII)

in welcher
$R^3$ für gegebenenfalls substituiertes Alkenyl steht,

gegebenenfalls in Gegenwart eines inerten Lösungsmittels sowie gegebenenfalls in Gegenwart eines Katalysators umsetzt.

Europäisches Patentamt

# EUROPÄISCHER RECHERCHENBERICHT

0006153 Nummer der Anmeldung

79101650.4

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | AT-B- 340396 (CIBA-GEIGY AG) * gesamt * -- | 1,2 | C07C 103/38 |
| | AT-B- 341509 (CIBA-GEIGY AG) * gesamt * -- | 1,2 | C07C 93/14 |
| | AT-B- 342028 (CIBA-GEIGY AG) * gesamt * -- | 1,2 | C07C 91/06<br>A01N 9/20 |
| | DE-B- 2305495 (CIBA-GEIGY AG) * gesamt * -- | 1-5 | A01N 37/00 |
| | DE-B- 1445088 (KREWEL-WERKE) * gesamt * -- | 8 | RECHERCHIERTE SACHGEBIETE (Int. Cl.²) |
| | GB-A- 998510 (CHINOIN GYOGYSZER) * gesamt * -- | 10 | C07C 103/38<br>C07C 103/375<br>C07C 103/32<br>C07C 103/30<br>C07C 93/14<br>C07C 93/00<br>C07C 91/00<br>C07C 91/02<br>C07C 91/04<br>C07C 91/06<br>A01N 9/20 |
| | AT-B- 338554 (CIBA-GEIGY AG) * gesamt * -- | 3-5 | |
| | AT-B- 335220 (CIBA-GEIGY AG) * gesamt * -- | 3-5 | |
| | AT-B- 329915 (CIBA-GEIGY AG) * gesamt * ---- | 3-5 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 14-09-1979 | HOFBAUER |

EPA form 1503.1 06.78